# EUROPÄISCHE PATENTSCHRIFT

(11) **EP 4 450 019 B1**
(45) Veröffentlichungstag und Bekanntmachung des Hinweises auf die Patenterteilung: **31.12.2025**
(21) Anmeldenummer: 24170626.6
(22) Anmeldetag: 16.04.2024
(51) Int. Cl.: A61C 7/02, A61C 7/28

(54) **SELBSTLIGIERENDES BRACKET FÜR DIE ORTHODONTIE**
SELF-LIGATING BRACKET FOR ORTHODONTICS
ATTACHE AUTOLIGATURANTE POUR L'ORTHODONTIE

(30) Priorität: 21.04.2023 DE 102023110194
(43) Veröffentlichungstag der Anmeldung: 23.10.2024
(73) Patentinhaber: Bernhard Förster GmbH, 75172 Pforzheim (DE)
(72) Erfinder: Wagner, Carsten, 75015 Bretten (DE)
(74) Vertreter: Twelmeier Mommer & Partner

(56) Entgegenhaltungen:
- US-A1- 2022 087 782

## Beschreibung

Die Erfindung geht aus von einem selbstligierenden Bracket für die Orthodontie mit den im Oberbegriff im des Anspruchs 1 angegebenen Merkmalen.

Ein derartiges Bracket ist aus der US 2022/0087782 A1 bekannt. Bei diesem Bracket ist eine federnde Klammer mit zwei Klammerschenkeln und einer die beiden Klammerschenkel verbindenden Klammerbiegung vorgesehen. Die Klammer weist im Bereich der Klammerbiegung eine im Wesentlichen konstante Breite in Richtung mesial-distal und eine schlüssellochförmige Eingriffsöffnung zum Ansetzen eines Klammeröffners auf. Erst im Endbereich der Klammerbiegung vergrößert sich die Klammerbreite. Der Eingriffsöffnung ist eine der Klammerbiegung zugewandte Abstützfläche für einen Klammeröffner zugeordnet, welche schräg zum ersten Klammerschenkel verläuft. Durch die Eingriffsöffnung ist der Querschnitt der Klammer geschwächt, was nachteilig in Bezug auf die Festigkeit der Klammer sein kann. Die Federkraft der Klammer kann im Laufe der Zeit nachlassen. Die Klammer kann auch im Bereich ihres durch die Eingriffsöffnung geschwächten Querschnitts brechen. In beiden Fällen erfüllt das Bracket seine Funktion nicht mehr.

Ein ähnliches Bracket ferner ist aus der US 5 906 486 A bekannt, bei welchem die Klammer im Bereich der Klammerbiegung eine konstante Breite in Richtung mesial-distal und eine kreisförmige Eingriffsöffnung zum Ansetzen eines Klammeröffners aufweist.

Aus der DE 10 2019 134 575 A1 ist ein nicht gattungsgemäßes Bracket bekannt, welches ebenfalls eine federnde Klammer mit zwei Klammerschenkeln und einer die beiden Klammerschenkel verbindenden Klammerbiegung aufweist. Jedoch befindet sich die Eingriffsöffnung zum Ansetzen eines Klammeröffners in dem zweiten Klammerschenkel, welcher kaum durch Biegespannungen belastet wird. Es kann vorkommen, dass sich im Laufe der Zeit Plaque in Vertiefungen und Hohlräumen des Brackets ablagert. Das Verschieben der Klammer in ihre Offenstellung kann durch Plaque-Ablagerungen erschwert werden, insbesondere wenn sie sich in einem Schlitz ablagern, in welchem der erste Klammerschenkel steckt. Wenn nach einiger Zeit ein durch die Nut verlaufender Drahtbogen ausgetauscht werden soll, kann es bei schwergängigem oder blockiertem ersten Klammerschenkel sehr leicht passieren, dass die Klammer durch den am zweiten Klammerschenkel angreifenden Klammeröffner unbeabsichtigt verbogen wird. Auch ein solches Bracket kann seine Funktion dann nicht mehr ordnungsgemäß erfüllen.

Der vorliegenden Erfindung liegt die Aufgabe zu Grunde, ein Bracket der eingangs genannten Art zu verbessern.

Diese Aufgabe wird gelöst durch ein Bracket mit den im Anspruch 1 angegebenen Merkmalen. Vorteilhafte Weiterbildungen der Erfindung sind Gegenstand der Unteransprüche.

Das erfindungsgemäße selbstligierende Bracket für die Orthodontie hat einen Sockel, eine von dem Sockel ausgehende okklusale Wand, eine von dem Sockel ausgehende gingivale Wand und eine Nut, welche die okklusale Wand und die gingivale Wand voneinander trennt und sich durchgehend in Richtung von mesial nach distal erstreckt. Die der Nut abgewandte Seite des Brackets wird als Befestigungsseite bezeichnet, welche dazu vorbereitet ist, auf einen Zahn geklebt zu werden. Das erfindungsgemäße Bracket kann mit seiner Befestigungsseite auf einer lingualen oder einer vestibulären Oberfläche eines Zahnes aufgeklebt werden. Die Nut wird in der deutschen Fachsprache wie in der englischen Sprache auch als "slot" bezeichnet. Sie dient dazu, einen Drahtbogen (arch wire) aufzunehmen. Der Drahtbogen führt üblicherweise durch eine Folge von Brackets, die auf einer Reihe von nebeneinander liegenden Zähnen befestigt sind. Durch Ziehen und/oder Verdrehen kann in dem Draht eine Vorspannung erzeugt werden, welche von dem Drahtbogen auf die Brackets und von diesen auf einen oder mehrere Zähne übertragen wird, um deren Stellung zu ändern.

Das Bracket hat einen Schlitz, welcher sich in Richtung von gingival nach okklusal erstreckt. Der Schlitz kann durch eine lingual gelegene Führungsfläche und durch eine labial gelegene Führungsfläche begrenzt sein. Das Bracket enthält ferner eine federnde Klammer, welche einen ersten Klammerschenkel und einen zweiten Klammerschenkel hat, welche durch einen gebogenen Abschnitt miteinander verbunden sind. Dieser gebogene Abschnitt ist etwa C-förmig und wird im Folgenden als Klammerbiegung bezeichnet. Die Klammerbiegung kann okklusal oder gingival angeordnet sein, je nach dem, in welcher Orientierung das Bracket auf die Oberfläche des Zahnes aufgeklebt wird. Bei einem Bracket, dessen Befestigungsseite zum Aufkleben auf eine vestibuläre Oberfläche eines Zahnes bestimmt ist, wird der erste Klammerschenkel auch als lingualer Schenkel und der zweite Klammerschenkel auch als labialer Schenkel bezeichnet. Der erste Klammerschenkel hat eine in Richtung gingival-okklusal verlaufende Längsrichtung und erstreckt sich in einer Ebene. Der erste Klammerschenkel steckt in dem Schlitz und ist darin in Richtung gingival-okklusal zwischen einer Schließstellung und einer Offenstellung der Klammer verschiebbar. Die Längsrichtung des ersten Klammerschenkels stimmt mit der Verschieberichtung überein. Der erste Klammerschenkel kann dabei zwischen der lingual gelegenen Oberfläche des Schlitzes und der labial gelegenen Oberfläche des Schlitzes geführt sein. Wenn die Klammer zum Öffnen von gingival nach okklusal verschoben wird, ist die Klammerbiegung okklusal angeordnet. Dann erstreckt sich der zweite Klammerschenkel in Schließstellung der Klammer bis in einen Ausschnitt in der gingivalen Wand. In der Offenstellung der Klammer ruht die Spitze des zweiten Klammerschenkels auf der okklusalen Wand, sodass ein Drahtbogen in die Nut eingesetzt oder aus der Nut entnommen werden kann. In der Schließstellung schließt der zweite Klammerschenkel die Nut und liegt an dem Drahtbogen federnd an, um diesen gegen den Grund der Nut zu drücken. Ein solches Bracket wird deshalb als "aktives Bracket" bezeichnet. Für den Fall, dass der Drahtbogen auf den zweiten Klammerschenkel eine Kraft ausübt, welche die Rückstellkraft der Klammer übersteigt, kann der Ausschnitt in der gingivalen Wand durch einen Anschlag begrenzt sein, an welchem der zweite Klammerschenkel anschlägt, wenn der Drahtbogen mit einer hinreichend großen Kraft auf den zweiten Klammerschenkel einwirkt. Der Anschlag begrenzt somit den Abstand des zweiten Klammerschenkels von dem Grund der Nut. Der Anschlag in der gingivalen Wand des Brackets begrenzt ferner die größtmögliche Abmessung des Drahtbogens in Richtung lingual-labial. Alternativ kann auch vorgesehen sein, dass die Klammer zum Öffnen von okklusal nach gingival verschoben wird. In einem solchen Fall ist die Klammerbiegung gingival angeordnet und der zweite Klammerschenkel erstreckt sich in Schließstellung bis in einen Ausschnitt der okklusalen Wand während seine Spitze in Offenstellung auf der gingivalen Wand ruht.

Bei okklusal angeordneter Klammerbiegung kann die Klammer in ihrer Schließstellung dadurch gehalten werden, dass der zweite Klammerschenkel beim Vorschieben in die Schließstellung gegen die okklusale Wand federt und nur durch elastisches Aufbiegen aus der Schließstellung in die Offenstellung überführt werden kann. Bei gingival angeordneter Klammerbiegung federt der zweite Klammerschenkel gegen die gingivale Wand.

Die Klammer des erfindungsgemäßen Brackets weist im Bereich der Klammerbiegung eine Eingriffsöffnung zum Ansetzen eines Klammeröffners auf. Der Klammeröffner ist ein Werkzeug zum Klammeröffnen. Der Klammeröffner kann einen Handgriff und ein, insbesondere zylindrisches, Eingriffsende zum Eingreifen in die Eingriffsöffnung der Klammer aufweisen. Als Klammeröffner kann auch eine Sonde verwendet werden, welche ein Zahnarzt üblicherweise zum Untersuchen von Zahnoberflächen einsetzt. Dementsprechend kann die Eingriffsöffnung auch als Sondeneingriffsöffnung bezeichnet werden. Das Eingriffsende des Klammeröffners kann in die Eingriffsöffnung eingeführt werden, um die Klammer von ihrer Schließstellung in ihre Offenstellung zu verschieben. Der erste Klammerschenkel kann derart eingerichtet sein, dass ein ungewollter Verlust der Klammer verhindert wird. Die Klammer kann durch ein Zusammenwirken des ersten Klammerschenkels mit anderen Teilen des Brackets nicht über ihre Offenstellung hinaus in Richtung der Klammerbiegung nach okklusal bzw. gingival verschoben werden. Entsprechende Ausgestaltungen des ersten Klammerschenkels sind beispielsweise aus den eingangs erwähnten Druckschriften US 5 906 486 A und DE 10 2019 134 575 A1 bekannt. Das Herausschieben des ersten Klammerschenkels aus dem Schlitz wird begrenzt, sodass die Klammer nicht aus dem Schlitz herausfallen kann.

Erfindungsgemäß ist vorgesehen, dass die Eingriffsöffnung - in einer Ansicht entlang der Längsrichtung des ersten Klammerschenkels oder in einer Draufsicht auf die in eine Ebene abgewickelte Klammer - seitlich von zwei V-förmig zueinander verlaufenden Armen begrenzt wird. Einer der beiden Arme begrenzt somit die Eingriffsöffnung an ihrer mesialen Seite. Der andere der beiden Arme begrenzt die Eingriffsöffnung an ihrer distalen Seite. Ein von mesial nach distal gemessener Abstand zwischen den beiden Armen ist mindestens so groß wie die von mesial nach distal gemessene Armbreite jedes der beiden Arme. Die Armbreite jedes der beiden Arme kann halb so breit wie die kleinste Breite der Klammerbiegung im Bereich außerhalb der Eingriffsöffnung sein. Jeder Arm kann einen geradlinig verlaufenden Abschnitt aufweisen. Jeder der beiden Arme kann höchstens so breit wie der größte Abstand zwischen den beiden Armen sein. Der Abstand zwischen den beiden Armen kann mindestens 0,7 mm betragen. Die Maßangaben und Maßverhältnisse beziehen sich auf das jeweilige Nennmaß, welches im Rahmen üblicher Fertigungstoleranzen variieren kann.

Der Querschnitt der Klammer im Bereich der Klammerbiegung bestimmt wesentlich die Federwirkung der Klammer. Der Querschnitt der Klammer hat im Bereich der Klammerbiegung ein Maximum, welches im Folgenden als Maximalquerschnitt bezeichnet wird. Der Querschnitt der Klammer hat im Bereich der Klammerbiegung ferner ein Minimum, welches im Folgenden als Minimalquerschnitt bezeichnet wird. Jeder der Arme hat im Bereich der Eingriffsöffnung einen Armquerschnitt. Der Querschnitt ist die Größe der Schnittfläche der Klammer, die an der entsprechenden Stelle entlang der Längsrichtung der Nut durchgeschnitten wurde. Der Querschnitt kann im Falle eines rechteckigen Klammerquerschnitts durch das Produkt aus der Dicke und der Breite der Klammer berechnet werden. Die Summe der Armquerschnitte der beiden Arme, an einer Stelle der Klammerbiegung gemessen, ist höchstens 10 %, insbesondere höchstens 6 %, kleiner als der Minimalquerschnitt.

Die Erfindung hat wesentliche Vorteile:
- Durch die beiden V-förmig zueinander verlaufenden Arme entsteht eine längliche Eingriffsöffnung, welche durch ihre große Breite in der Nähe des zweiten Klammerschenkels ein leichtes Einführen des Klammeröffners ermöglicht.
- Gleichzeitig haben die beiden V-förmig zueinander verlaufenden Arme eine Zentrierwirkung auf den Klammeröffner. Der Klammeröffner wird dadurch beim Öffnungsvorgang in Richtung mesial-distal zentriert und sitzt mittig in der Klammer.
- Die längliche Eingriffsöffnung ermöglicht, dass die Eingriffsöffnung dem ersten Klammerschenkel angenähert werden kann. Die Eingriffsöffnung kann also in der Klammerbiegung sehr weit in Richtung zum Sockel des Brackets verlagert werden. Die vom Klammeröffner ausgeübte Öffnungskraft kann dadurch etwa mittig zwischen den beiden Klammerschenkeln angreifen.
- Der mittige Kraftangriff optimiert die Kräfte des Klammeröffners auf die Klammer. Zu Beginn des Öffnungsvorganges verteilt sich die Öffnungskraft gleichmäßig auf beide Klammerschenkel, sodass auch eine durch Verschmutzungen schwergängige Klammer ohne Verbiegen geöffnet werden kann.
- Aufgrund der Zentrierwirkung der beiden Arme kann sich der Kraftangriffspunkt des Klammeröffners im Verlauf des Öffnungsvorganges sogar noch dichter an den ersten Klammerschenkel heran verlagern. Dadurch wirkt ein größerer Anteil der Öffnungskraft auf den ersten Klammerschenkel als auf den zweiten Klammerschenkel. Dies vereinfacht das Öffnen der Klammer weiter, da der erste Klammerschenkel oftmals über den gesamten Verschiebeweg durch Plaque-Ablagerungen schwergängig ist, während in Bezug auf den zweiten Klammerschenkel nach Überwinden einer anfänglichen Blockierung im weiteren Verlauf der Öffnungsbewegung keine nennenswerte Schwergängigkeit mehr vorhanden ist.
- Die Erfindung kann gewährleisten, dass - abgesehen von Fertigungstoleranzen - die Summe der Armquerschnitte mit dem Querschnitt der Klammer im Bereich der Klammerbiegung außerhalb der Eingriffsöffnung übereinstimmt. Dies gilt insbesondere auch dann, wenn die Breite jedes der beiden Arme halb so breit wie die kleinste Breite der Klammerbiegung im Bereich außerhalb der Eingriffsöffnung ist.
- Eine Schwächung der Klammer durch die Eingriffsöffnung im Bereich der Klammerbiegung, welche der am stärksten durch Biegespannungen belastete Bereich der Klammer ist, kann verhindert werden. Durch die beiden V-förmig zueinander verlaufenden Arme kann sich die die Breite der Klammer im Bereich der Klammerbiegung vergrößern, ohne dass sich der Querschnitt der Klammer verändert. Der die Federwirkung bestimmende Querschnitt der Klammer kann über die gesamte Klammerbiegung praktisch konstant gehalten werden. Hierdurch kann ein gleichmäßiges Biegeverhalten über die gesamte Klammerbiegung erreicht werden. Das Biegeverhalten und die Federcharakteristik der Klammer verbessern sich.
- Die erfindungsgemäße Klammer hat eine sehr hohe Stabilität und Dauerfestigkeit sowie ein gutes Dauerschwingverhalten. Das bedeutet, unter Berücksichtigung von 240.000 Kauzyklen pro Jahr im Mund eines Patienten lässt die Federkraft auch während einer Einsatzzeit von 18 Monaten oder mehr nicht nennenswert nach. Zudem können Klammerbrüche durch Materialermüdung vermieden werden.
- Die Klammer kann sehr einfach aus einem Blech hergestellt werden. Die längliche Eingriffsöffnung kann vor dem Biegen sehr einfach beispielsweise durch Ausstanzen hergestellt werden. Außer der Biegung der Klammer im Bereich zwischen den beiden Klammerschenkeln ist keine plastische Verformung der Klammer bei ihrer Herstellung erforderlich.

In weiterer Ausgestaltung der Klammer kann der Winkel zwischen den beiden Armen im Bereich von 40° bis 75°, insbesondere im Bereich von 45° bis 70°, liegen. Einer der Arme - in einer Draufsicht auf die in eine Ebene abgewickelte Klammer - kann in einem Winkel zu der Längsrichtung der Klammer im Bereich von 20° bis 45°, insbesondere im Bereich von 23° bis 33°, verlaufen. Der genannte Winkel des Armes kann insbesondere zu der Längsrichtung des ersten Klammerschenkels gemessen werden. Eine eventuelle Angulation des Brackets kann zusätzlich zu den genannten Winkelbereichen zu berücksichtigen sein.

In Ausgestaltung kann sich die längliche Eingriffsöffnung über mindestens 50 %, insbesondere mindestens 55 %, der Klammerbiegung erstrecken. Die längliche Eingriffsöffnung kann sich über einen Biegungswinkel der Klammerbiegung von mindestens 100°, insbesondere mindestens 120°, erstrecken. Insbesondere bei einem Gesamt-Biegungswinkel von 200° oder mehr kann sich die Eingriffsöffnung über einen Biegungswinkel von mindestens 125° erstrecken. Unter dem Begriff "Gesamt-Biegungswinkel" wird der gesamte Biegungswinkel der Klammerbiegung vom ersten Klammerschenkel bis zum zweiten Klammerschenkel verstanden. An den Abschnitt der Klammerbiegung mit den beiden V-förmig zueinander verlaufenden Armen kann sich ein Abschnitt der Klammerbiegung anschließen, in welchem die beiden Arme parallel zueinander verlaufen. Der Abschnitt, in welchem die beiden Arme parallel zueinander verlaufen, kann an den zweiten Klammerschenkel angrenzen. Jeder Arm kann sich mit im Wesentlichen gleichbleibender Breite über einen Abschnitt der Klammerbiegung erstrecken. Dadurch kann die längliche Eingriffsöffnung verlängert werden, sodass sie sich über einen besonders großen Biegungswinkel der Klammerbiegung erstreckt.

In weiterer Ausgestaltung kann der Maximalquerschnitt höchstens 20 % größer als der Minimalquerschnitt sein. Die Armquerschnitte der beiden Arme können sich an einer Stelle der Klammerbiegung höchstens um 10 % unterscheiden. Außerdem kann eine Veränderung des Armquerschnitts entlang des Arm-Verlaufs bei jedem der Arme höchstens 10 % betragen. Dies kann bei konstanter Dicke der Klammer beispielsweise gewährleistet werden, wenn die Nenn-Breite jedes der beiden Arme eine Toleranz von höchstens ±5% aufweist. Insbesondere können sich Abschnitte der Klammerbiegung, deren Querschnitte mehr als 10 % größer als der Minimalquerschnitt sind, höchstens über 20 % des gesamten Biegungswinkels der Klammerbiegung, insbesondere über einen Biegungswinkel von höchstens 30°, erstrecken. Durch diese Maßnahmen einzeln, insbesondere in Kombination miteinander, können Querschnittsveränderungen durch Fertigungstoleranzen abgedeckt werden. Der Querschnitt im Bereich der Klammerbiegung kann in engen Grenzen konstant gehalten werden, sodass sich ein besonders gleichmäßiges Biegeverhalten über die gesamte Klammerbiegung erreichen lässt. Gleichwohl kann sich die gesamte Breite der Klammer im Bereich der Klammerbiegung um 50 % oder mehr, insbesondere um 50 % bis 70 %, im Vergleich zur Breite des ersten Klammerschenkels vergrößern. Außerdem können Übergangsradien zwischen verschiedenen Klammerabschnitten vorgesehen werden, um scharfkantige Übergänge zu vermeiden, beispielsweise von dem Abschnitt mit den V-förmig verlaufenden Armen zu einem Abschnitt ohne Eingriffsöffnung. Bei einer Baureihe von selbstligierenden Brackets für die Orthodontie, welche mehrere erfindungsgemäße Brackets umfasst, kann vorgesehen sein, dass das Nennmaß für den Minimalquerschnitt der Klammer im Bereich der Klammerbiegung für alle Brackets der Baureihe gleich ist. Der Minimalquerschnitt eines der Brackets der Baureihe kann sich um höchstens 10 % von dem jeweiligen Minimalquerschnitt jedes der anderen Brackets der Baureihe unterscheiden. Damit kann ein besonders gleichmäßiges Biegeverhalten auch über die Baureihe von Brackets erreicht werden, aus welcher die auf den Zahnbogen des Patienten aufzuklebenden Brackets ausgewählt werden. Damit können gleichmäßige Verhältnisse entlang des gesamten Drahtbogens erreicht werden.

Die Klammerbiegung kann - in einem Längsschnitt durch den ersten Klammerschenkel gesehen -- eine Mitte aufweisen. Wenn die Klammer im Bereich der Klammerbiegung mit einem gleichmäßigen Biegeradius gebogen ist, handelt es sich bei dieser Mitte um den Mittelpunkt des Biegeradius und bei dem Biegungswinkel um den zugehörigen Mittelpunktswinkel. Bei nicht gleichmäßigem Biegeradius kann der Biegungswinkel analog um eine angenäherte Mitte der Klammerbiegung gemessen werden. Die Mitte der Klammerbiegung kann - in einem Längsschnitt durch den ersten Klammerschenkel gesehen - in einer ersten Höhe H1 oberhalb des ersten Klammerschenkels liegen. Das dem ersten Klammerschenkel zugewandte Ende der Eingriffsöffnung kann auf einer zweiten Höhe H2 oberhalb des ersten Klammerschenkels liegen. Die zweite Höhe H2 kann in einem Bereich liegen, welcher von der um 20 % verringerten ersten Höhe und der um 20 % vergrößerten ersten Höhe begrenzt ist. Die zweite Höhe H2 kann also in einem Bereich von 0,8 * H1 bis 1,2 * H1 liegen. Insbesondere kann die zweite Höhe H2 in einem Bereich der ersten Höhe H1 plus/minus 0,1 mm (H1 ± 0,1 mm) liegen. Dadurch kann in besonders guter Weise ein mittiger Kraftangriff des Klammeröffners gewährleistet werden, sodass sich die Öffnungskraft zu Beginn des Öffnungsvorganges besonders gleichmäßig auf beide Schenkel verteilt.

In weiterer Ausgestaltung kann das Bracket an seiner Befestigungsseite eine verbreiterte Basis aufweisen, deren in Richtung von mesial nach distal und/oder von gingival nach okklusal gemessene Breite größer als die entsprechende Breite des Sockels ist. Eine derart verbreiterte Basis wird auch als "Pad" bezeichnet und kann die zum Aufkleben des Brackets zur Verfügung stehende Fläche an der Befestigungsseite vergrößern und dadurch die Haftung des Brackets auf dem Zahn verbessern. Die Befestigungsseite kann auch mit Strukturen, beispielsweise hinterschnittenen Vorsprüngen in wechselnder Orientierung, versehen sein, welche beim Verkleben des Brackets mit einem Zahn zu einer deutlich besseren Haftung des Brackets auf dem Zahn führen. Bei Brackets aus Metall kann die Basis auch gesondert hergestellt und erst nachträglich durch Schweißen mit dem Sockel des Brackets verbunden werden. Die okklusale Wand kann wenigstens einen okklusalen Ligaturenflügel aufweisen. Die gingivale Wand kann wenigstens einen gingivalen Ligaturenflügel aufweisen. An Ligaturenflügeln können in einer an sich bekannten Weise Ligaturendrähte angebracht werden. Die der Klammerbiegung zugeordnete Wand kann - in einer Ansicht entlang der Längsrichtung des ersten Klammerschenkels gesehen - an ihrem dem Grund der Nut abgewandten Ende eine Vertiefung aufweisen, in welcher der zweite Klammerschenkel und/oder die Klammerbiegung der in ihrer Schließstellung befindlichen Klammer sitzt. In Offenstellung der Klammer kann der zweite Klammerschenkel in der Vertiefung sitzen. Hierdurch kann die Führung der Klammer beim Öffnen und Schließen der Klammer verbessert werden. Außerdem kann der Tragekomfort des Brackets für den Patienten verbessert werden. Die Tiefe der Vertiefung kann zumindest 80 % der Dicke der Klammer betragen.

Der Schlitz, in welchem der erste Klammerstenkel steckt, kann quer zur Nut, insbesondere senkrecht zur Nut, verlaufen. Insbesondere kann sich der Schlitz durchgehend durch den Sockel hindurch erstrecken. Alternativ kann der Schlitz auf der der Klammerbiegung abgewandten Seite des Brackets geschlossen sein, wobei es sich hierbei insbesondere um die gingivale Seite des Brackets handeln kann. Der Schlitz kann im Sockel zwischen der Nut und der Befestigungsseite des Brackets verlaufen. Der Grund der Nut kann insbesondere unterbrechungsfrei durchgehend von mesial nach distal verlaufen. Dadurch besteht kein Durchgang zwischen dem Schlitz und der Nut. Dies kann die Herstellung des Brackets, insbesondere eines einstückigen Brackets, vereinfachen. Außerdem hat das Bracket dann im Inneren weniger Freiräume, welche sich durch Ablagerungen zusetzen können.

In weiterer Ausgestaltung kann das Bracket eine der Klammerbiegung zugewandte Abstützfläche für den Klammeröffner aufweisen, welche schräg zum ersten Klammerschenkel verläuft. Die Abstützfläche kann in einem Winkel von 60° bis 85°, insbesondere in einem Winkel von 70° bis 80°, zum ersten Klammerschenkel verlaufen. Die schräge Abstützfläche kann das Öffnen der Klammer mit dem Klammeröffner erleichtern. Die Nut des Brackets kann an ihrem distalen Ende und an ihrem mesialen Ende jeweils Schrägflächen und/oder Rundungen aufweisen. In der Nut können auf der der Klammerbiegung zugewandten Wand, insbesondere der okklusalen Wand, jeweils zwei Rippen vorgesehen sein, welche sich in Richtung lingual-labial erstrecken. Die Rippen können angefaste oder gerundete Kanten haben. Durch die Rippen kann bei der Herstellung des Brackets sehr einfach eine Feinabstimmung der in Richtung gingival-okklusal gemessenen Breite der Nut vorgenommen werden. Die Klammer kann einen verrundeten Rand aufweisen.

Weitere Einzelheiten und Vorteile der Erfindung werden an Ausführungsbeispielen der Erfindung unter Bezugnahme auf die beigefügten Zeichnungen erläutert. Gleiche und einander entsprechende Komponenten sind darin mit übereinstimmenden Bezugszahlen versehen. Es zeigen:
- Figur 1: eine perspektivische und stark vergrößerte Darstellung eines ersten Ausführungsbeispiels eines erfindungsgemäßen Brackets mit einer Klammer in Schließstellung,
- Figur 2: das Bracket der Figur 1 in einer dieser entsprechenden Ansicht, wobei sich die Klammer in Offenstellung befindet,
- Figur 3: eine Draufsicht auf das Bracket der Figur 1,
- Figur 4: eine entlang der Schnittfläche IV-IV der Figur 3 geschnittene Ansicht des Brackets,
- Figur 5: eine entlang der Schnittfläche V-V der Figur 3 geschnittene Ansicht des Brackets
- Figur 6: eine Draufsicht auf die Klammer des Brackets der Figur 3,
- Figur 7: eine Ansicht der Klammer in Richtung des Pfeiles VII der Figur 6,
- Figur 8: eine entlang der Schnittfläche VIII-VIII der Figur 7 geschnittene Ansicht der Klammer,
- Figur 9: eine Draufsicht auf die in eine Ebene abgewickelte Klammer der Figuren 6 bis 8,
- Figur 10: das Bracket der Figur 1 in einer dieser entsprechenden Ansicht zusammen mit einem Klammeröffner,
- Figur 11: das Bracket der Figur 2 in einer dieser entsprechenden Ansicht zusammen mit dem Klammeröffner,
- Figur 12: vier Schnittansichten a) bis d) des Brackets der Figur 4, welche Zwischenschritte beim Verschieben der Klammer aus ihrer Schließstellung in ihre Offenstellung mit dem Klammeröffner zeigen,
- Figur 13: eine der Figur 3 ähnliche Draufsicht auf ein zweites Ausführungsbeispiel des erfindungsgemäßen Brackets,
- Figur 14: eine Draufsicht auf die Klammer des Brackets aus Figur 13,
- Figur 15: eine der Figur 7 ähnliche Ansicht der Klammer aus Figur 14,
- Figur 16: eine der Figur 9 ähnliche Ansicht der Klammer aus Figur 14.

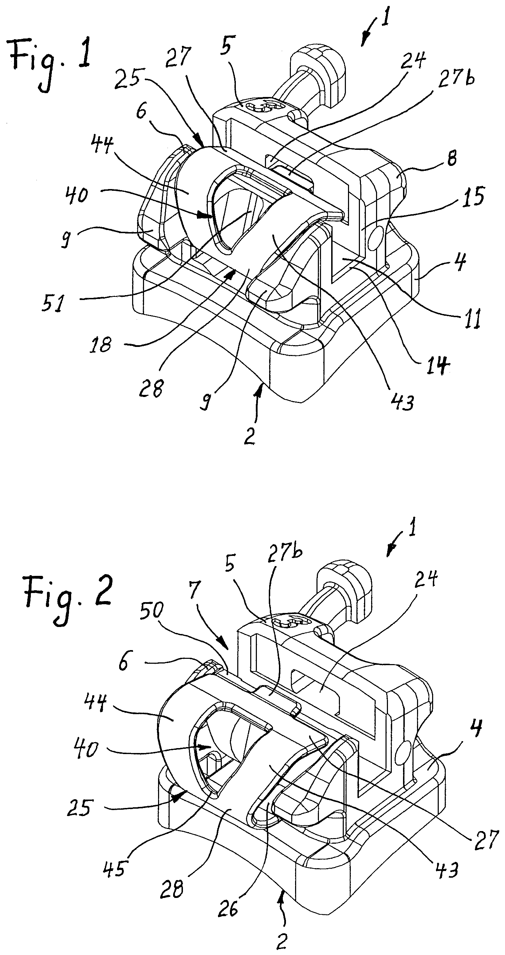

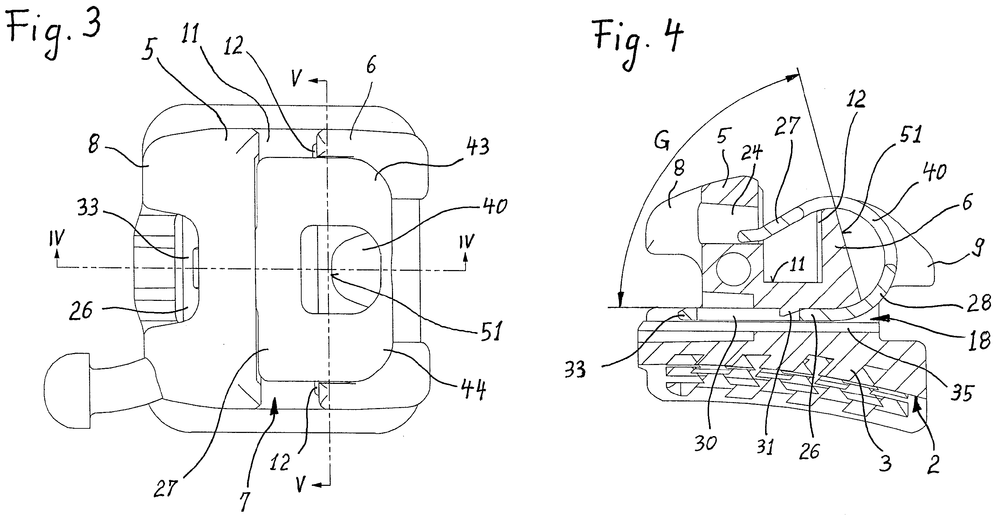

In den Figuren 1 bis 5 ist ein Ausführungsbeispiel eines erfindungsgemäßen Brackets 1 dargestellt. Das erfindungsgemäße Bracket 1 hat eine gewölbte Befestigungsseite 2, deren Wölbung der vestibulären Seite eines Zahnes (nicht dargestellt) angenähert ist. An der Befestigungsseite 2 sind in Reihen angeordnete Vorsprünge 3 angeordnet. Auf der Befestigungsseite 2 kann ein Klebstoff aufgetragen werden, um das Bracket 1 auf die vestibuläre Seite eines Zahnes zu kleben. Die Befestigungsseite 2 bildet somit die linguale Seite des Brackets 1. Bei einem Bracket zum Aufkleben auf die linguale Seite eines Zahnes, sind die Angaben "lingual" und "labial" entsprechend zu tauschen. Das Bracket 1 hat einen Sockel 4, von welchem eine gingivale Wand 5 und eine okklusale Wand 6 ausgehen. Die beiden Wände 5 und 6 verlaufen parallel zueinander und sind durch eine Nut 7 getrennt, welche gradlinig durchgehend von distal nach mesial verläuft und nach labial offen ist. An der gingivalen Wand 5 sind zwei in Richtung gingival ragende Ligaturenflügel 8 vorgesehen. An der okklusalen Wand 6 sind zwei in Richtung okklusal ragende Ligaturenflügel 9 vorgesehen. In Figur 4 ist somit die für das Bracket vorgesehene Orientierung auf einem Zahn hinsichtlich der Richtungen wie folgt: unten lingual, oben labial, rechts okklusal, links gingival und senkrecht zur Zeichenebene distal-mesial.

Die Nut 7 dient zur Aufnahme eines Drahtbogens (nicht dargestellt), welcher insbesondere einen rechteckigen Querschnitt hat und nicht Bestandteil des Brackets ist. Durch Vorspannen des Drahtbogens kann auf den Grund 11 der Nut 7 und auf die Wände 5 und 6 ein Drehmoment ausgeübt werden. Zu diesem Zweck ist der lichte Querschnitt der Nut 7 im Wesentlichen rechteckig ausgebildet. Er wird im vorliegenden Fall durch den Grund 11 der Nut 7 sowie durch zwei Rippen 12 auf der okklusalen Wand 6 begrenzt, welche der Reibungsminderung des Drahtbogens in der Nut 7 dienen. Der Grund 11 erstreckt sich unterbrechungsfrei durchgehend von mesial nach distal. An den Enden der Nut 7 sind gerundete Schrägflächen 14 am Grund 11, gerundete Schrägflächen 15 an der gingivalen Wand 5 und gerundete Schrägflächen an der okklusalen Wand 6 vorgesehen, welche den Eingang der Nut 7 erweitern und ebenfalls der Reibungsminderung für den in der Nut 7 liegenden Drahtbogen dienen. Dies kann insbesondere bei großen Fehlstellungen der Zähne von Vorteil sein, welche einen besonders unregelmäßigen Verlauf des Drahtbogens erfordern.

Unterhalb des Grundes 11 der Nut 7 verläuft parallel zum Grund 11 ein Schlitz 18, welcher durch eine lingual gelegene Oberfläche 19 und eine labial gelegene Oberfläche 20 sowie durch zwei schmale Seitenwände 21 begrenzt ist. Die Seitenwände 21 verlaufen parallel zueinander und erstrecken sich zwischen der lingual gelegenen Oberfläche 19 und der labial gelegenen Oberfläche 20. Der Schlitz 18 erstreckt sich durchgehend durch den Sockel 4 hindurch und ist mit der Nut 7 nicht verbunden.

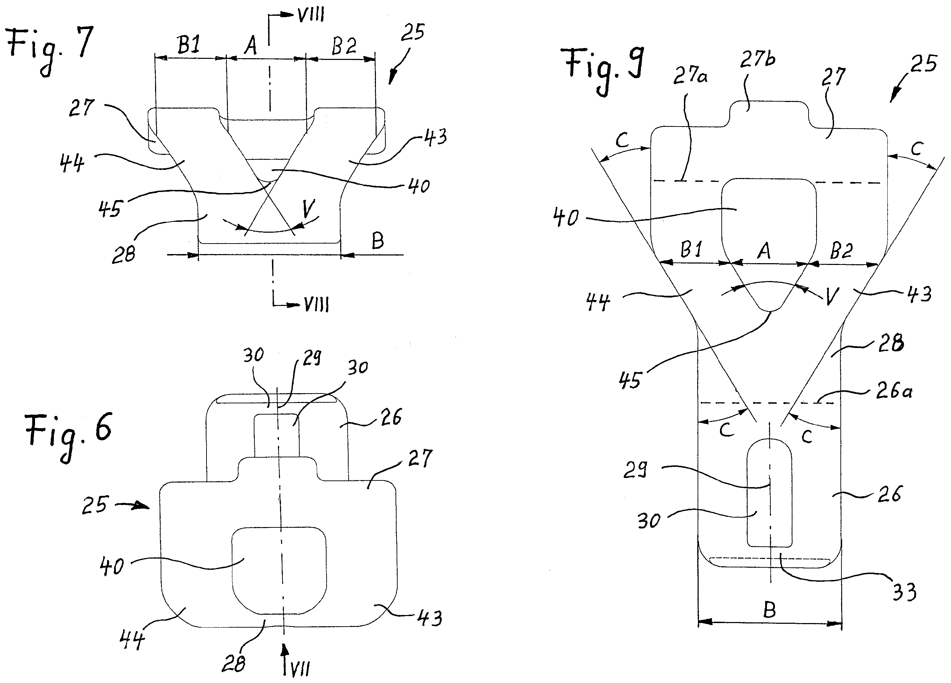

Zu dem Bracket 1 der Figuren 1 bis 5 gehört eine Klammer 25 aus einem Federwerkstoff, welche in den Figuren 6 bis 9 separat dargestellt ist. Diese wird aus einem ebenen Blech mit konstanter Dicke D in der in Figur 9 dargestellten Form ausgeschnitten und anschließend gebogen. Sie hat einen geradlinig verlaufenden ersten Klammerschenkel 26 und einen demgegenüber kürzeren zweiten Klammerschenkel 27, welcher annähernd geradlinig verläuft. Der erste Klammerschenkel 26 ist der linguale Schenkel und der zweite Klammerschenkel 27 ist der labiale Schenkel. Verbunden sind die beiden Klammerschenkel 26, 27 durch einen annähernd kreisbogenförmig verlaufenden Abschnitt, welcher als Klammerbiegung 28 bezeichnet wird. Im dargestellten Fall bildet die Klammerbiegung 28 einen okklusal gelegenen Abschnitt der Klammer 25. Bei einem Bracket zum Aufkleben auf einen Zahn in umgekehrter Richtung kann die Klammerbiegung 28 einen gingival gelegenen Abschnitt der Klammer 25 bilden und die Angaben "okklusal" und "gingival" sind entsprechend zu tauschen. Der erste Klammerschenkel 26 passt mit wenig Spiel in den Schlitz 18. Der zweite Klammerschenkel 27 hat eine von mesial nach distal gemessene Breite, welche annähernd der Länge der Nut 7 im Bracket entspricht. Er verläuft nicht parallel, sondern in einem spitzen Winkel zum ersten Klammerschenkel 26, dem er sich, von der Klammerbiegung 28 herkommend, annähert. Die Klammerbiegung 28 hat einen Gesamt-Biegungswinkel F von 210°. Der Übergang von der Klammerbiegung 28 zu den Klammerschenkeln 26, 27 ist in Figur 9 durch gestrichelte Linien angedeutet, wobei die Linie 26a den Beginn des ersten Klammerschenkels 26 und die Linie 27a den Beginn des zweiten Klammerschenkels 27 markiert.

Der zweite Klammerschenkel 27 hat an seinem freien (gingivalen) Ende einen sich nach gingival erstreckenden Fortsatz 27b, der in Richtung nach labial abgewinkelt ist. Der Fortsatz 27b ist schmaler als der zweite Klammerschenkel 27 und schmaler als der erste Klammerschenkel 26; er passt mit wenig Spiel in einen Ausschnitt 24, welcher in der gingivalen Wand 5 angeordnet ist.

Der erste Klammerschenkel 26 weist eine Längsrichtung 29 und eine längliche Aussparung 30 auf, welche parallel zur Längsrichtung 29 verläuft. Die Längsrichtung 29 ist durch eine strichpunktierte Linie angedeutet, vgl. Figuren 6 und 9. Die Aussparung 30 ist als Langloch ausgestaltet und zentral im ersten Klammerschenkel 26 angeordnet. In die Aussparung 30 ragt ein von der labial gelegenen Oberfläche 20 des Schlitzes 18 ausgehender Vorsprung 31 nach lingual hinein. Die labial gelegene Oberfläche 20 ist als ebene Führungsfläche für den ersten Klammerschenkel 26 ausgebildet. Der Vorsprung 31 hat die Form einer Rastnase. Die zur Klammerbiegung 28 weisende (okklusale) Seite des Vorsprungs 31 verläuft in einem Winkel von etwa 20° schräg zu der Führungsfläche 20. Die der Klammerbiegung 28 abgewandte (gingivale) Seite des Vorsprung 31 ist zu der Führungsfläche 20 stärker geneigt als die zur Klammerbiegung 28 weisende Seite. Der Vorsprung 31 ist einstückig am Sockel 4 ausgeformt. Die Aussparung 30 wird an ihrem der Klammerbiegung 28 abgewandten (gingivalen) Ende von einem Anschlag 33 begrenzt, welcher durch einen von mesial nach distal verlaufenden Steg am freien (gingivalen) Ende des ersten Klammerschenkels 26 gebildet wird. Die lingual gelegene Oberfläche 19 des Schlitzes 18 enthält zwei ebene Führungsflächen 19a und 19b für den ersten Klammerschenkel 26, zwischen denen eine Rille 35 angeordnet ist. Die Führungsflächen 19a, 19b verlaufen parallel zu der Führungsfläche 20. Die Führungsflächen 19a, 19b und die Rille 35 erstrecken sich von gingival nach okklusal über die gesamte Länge des Schlitzes 18. Bei der Montage der Klammer 25 wird der erste Klammerschenkel 26 entlang der Längsrichtung 29 in den Schlitz 18 eingeschoben. Der Anschlag 33 erreicht den Vorsprung 31 und der erste Klammerschenkel 26 wird federelastisch in Richtung lingual verformt. Dabei bildet die Rille 35 einen Ausweichraum, in welchen der Anschlag 33 ausweichen kann, wenn er beim Einschieben der Klammer 25 über den Vorsprung 31 gleitet. Der erste Klammerschenkel 26 wird dabei von den Führungsflächen 19a, 19b und dem Vorsprung 31 im Bereich des Anschlags 33 um seine Längsrichtung 29 gebogen. Wenn der Anschlag 33 über den Vorsprung 31 hinweggeschoben ist, federt der erste Klammerschenkel 26 in seine ebene Ausgangsform zurück. Ist der erste Klammerschenkel 26 vollständig in den Schlitz 18 eingeschoben, befindet sich die Klammer 25 in ihrer Schließstellung, vgl. Figuren 1, 3 und 4.

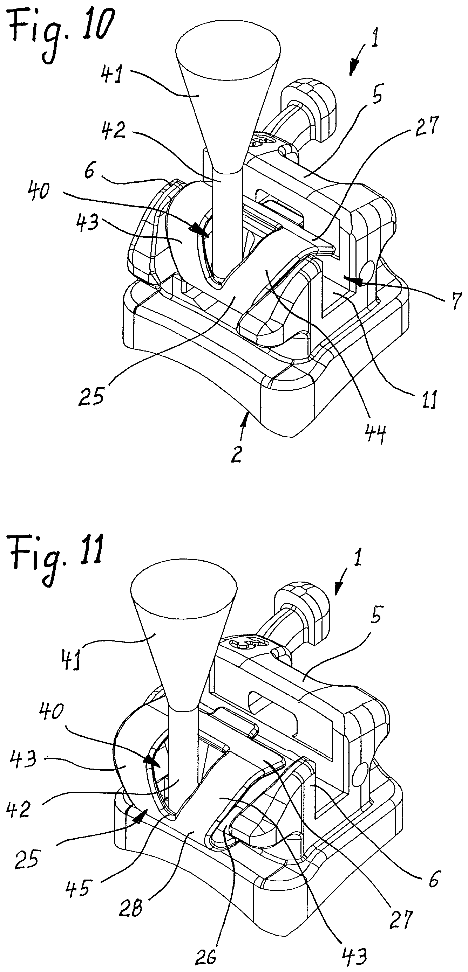

Zum Verschieben der Klammer 25 von der Schließstellung in die Offenstellung ist im Bereich der Klammerbiegung 20 eine Eingriffsöffnung 40 angeordnet, in welche mit einem als Klammeröffner 41 bezeichneten Werkzeug eingegriffen werden kann, vgl. Figuren 10 bis 12. Der Klammeröffner 41 hat ein zylindrisches Eingriffsende 42 zum Eingreifen in die Eingriffsöffnung 40. An seinem dem Eingriffsende 42 abgewandten Ende hat der Klammeröffner 41 einen Handgriff (nicht dargestellt). Die Eingriffsöffnung 40 wird seitlich von einem mesialen Arm 43 und einem distalen Arm 44 begrenzt. In einer Ansicht entlang der Längsrichtung 29 des ersten Klammerschenkels, siehe Figur 7, und in einer Draufsicht auf die in eine Ebene abgewickelte Klammer 25, siehe Figur 9, verlaufen die beiden Arme 43 und 44 V-förmig zueinander. Die beiden Arme 43, 44 haben einen Winkel V und einen von mesial nach distal gemessenen Abstand A zueinander. Der Winkel V beträgt im Ausführungsbeispiel circa 63°. Die beiden Arme 43 und 44 verlaufen in der Draufsicht der Figur 9 jeweils in einem Winkel C zu der Längsrichtung 29 der Klammer 25, welcher halb so groß wie der Winkel V ist. Der erste Klammerschenkel 26 hat eine konstante Breite B, welche im Ausführungsbeispiel 1,44 mm beträgt. Die kleinste Breite der Klammerbiegung 28 im Bereich außerhalb der Eingriffsöffnung 40 stimmt mit der Breite B überein. Der Arm 43 hat eine konstante Breite B1, welche halb so groß wie die Breite B ist. Der Arm 44 hat eine konstante Breite B2, welche mit der Breite B1 übereinstimmt. Damit die beiden Arme 43 und 44 im V-förmigen Bereich nicht spitz aufeinander zu laufen, ist ein Übergangsradius 45 vorgesehen. Ausgehend von dem Übergangsradius 45 vergrößert sich der Abstand A mit zunehmender Entfernung vom ersten Klammerschenkel 26. An den Abschnitt, in welchem die beiden Arme 43 und 44 V-förmig zueinander verlaufen, schließt sich ein Abschnitt der Klammerbiegung 28 an, in welchem die beiden Arme 43, 44 parallel zueinander verlaufen. An wenigstens einer Stelle der Klammerbiegung 28 kann zwischen den beiden Armen 43, 44 ein Abstand A gemessen werden, welcher mindestens so groß wie die Breite B1 und wie die Breite B2 ist. Im Ausführungsbeispiel beträgt der Abstand A in dem dem Übergangsradius 45 abgewandten Bereich der Durchgangsöffnung 40 sogar 0,96 mm. Die längliche Eingriffsöffnung 40 erstreckt sich über einen Biegungswinkel E der Klammerbiegung 28 von 126°, und damit über 60 % der gesamten Klammerbiegung 28 mit ihrem Gesamt-Biegungswinkel F von 210°.

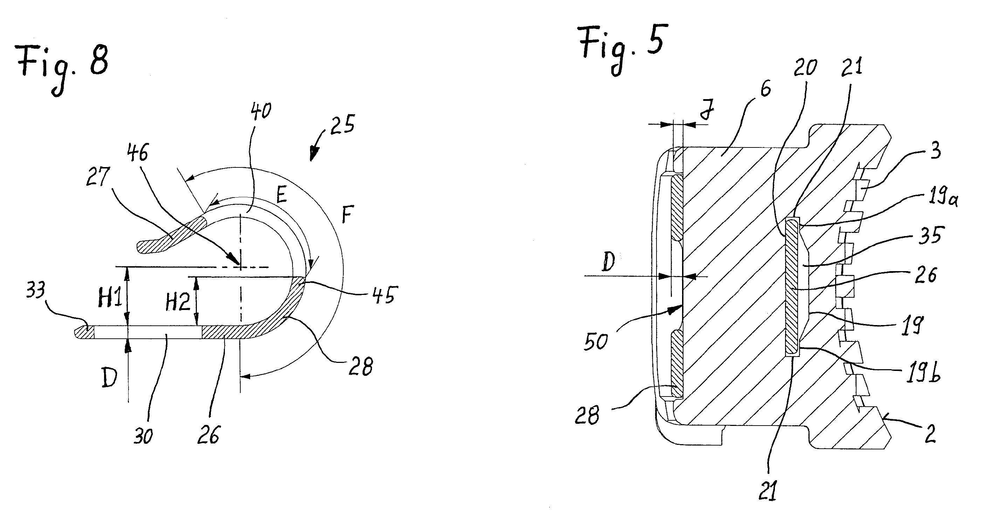

Die Klammerbiegung 28 ist mit einem Biegeradius von 0,55 mm gebogen. In dem in Figur 8 dargestellten Längsschnitt durch den ersten Klammerschenkel 26 liegt die Mitte 46 der Klammerbiegung 28 somit auf einer Höhe H1 von 0,55 mm oberhalb des ersten Klammerschenkels 26. Das dem ersten Klammerschenkel 26 zugewandte Ende der Eingriffsöffnung 40, also das untere Ende in den Figuren 7 und 8, welches durch den Übergangsradius 45 begrenzt wird, liegt auf einer zweiten Höhe H2 oberhalb des ersten Klammerschenkels 26. Die zweite Höhe H2 liegt in einem Bereich, welcher von der um 10 % verringerten ersten Höhe (0,9 * H1) und der um 10 % vergrößerten ersten Höhe (1,1 * H1) begrenzt ist. Aus dieser Berechnungsvorschrift (H1 ± 10 %) ergibt sich somit ein Bereich für die zweite Höhe H2 von 0,495 mm bis 0,605 mm.

In Figur 5 sind die Schnittflächen der durchgeschnittenen Klammer 25 ersichtlich, welche den jeweiligen Querschnitt der Klammer 25 zeigen. Die Summe der Armquerschnitte der beiden Arme 43, 44 stimmt hier mit dem Querschnitt des ersten Klammerschenkels 26 überein. Der Minimalquerschnitt im Bereich der Klammerbiegung 28 außerhalb der Eingriffsöffnung 40 liegt aufgrund der konstanten Dicke D der Klammer 25 im Bereich der kleinsten Breite B, vgl. Figur 9. In Richtung zu dem Übergangsradius 45 vergrößert sich der Querschnitt durch die zunehmende Breite Klammer 25. Der Maximalquerschnitt der Klammerbiegung 28 befindet sich im Bereich des Übergangsradius 45. Im Ausführungsbeispiel beträgt die Breite dort 1,64 mm, sodass der Maximalquerschnitt 14 % größer der Minimalquerschnitt ist. In dem Abschnitt mit den parallel zueinander verlaufenden Armen 43, 44 beträgt die äußere Klammer-Breite 2,4 mm und ist damit 67 % größer als die kleinste Breite B von 1,44 mm. Die Summe der beiden Armquerschnitte stimmt jedoch aufgrund der vorgenannten Nennmaße B1 und B2 mit dem Minimalquerschnitt außerhalb der Eingriffsöffnung 40 überein. Dadurch hat die Klammer 25 ein sehr gutes Biegeverhalten und eine gleichmäßige Federcharakteristik, woraus sich eine hohe Dauerfestigkeit der Klammer 25 ergibt.

Die der Klammerbiegung 28 zugeordnete (okklusale) Wand 6 hat an ihrem dem Grund 11 der Nut 7 abgewandten (labialen) Ende eine Vertiefung 50, in welcher die Klammerbiegung 28 der in ihrer Schließstellung befindlichen Klammer 25 sitzt, vgl. Figur 5. Die Tiefe J der Vertiefung 50 beträgt zumindest 80 % der Dicke D der Klammer 25. In Offenstellung der Klammer sitzt der zweite Klammerschenkel 27 in der Vertiefung 50, vgl. Figur 2. Das Bracket 1 weist eine der Klammerbiegung 28 zugewandte Abstützfläche 51 für das Eingriffsende 42 des Klammeröffners 41 auf.

Die Abstützfläche 51 verläuft in einem Winkel G = 75° schräg zum ersten Klammerschenkel 26.

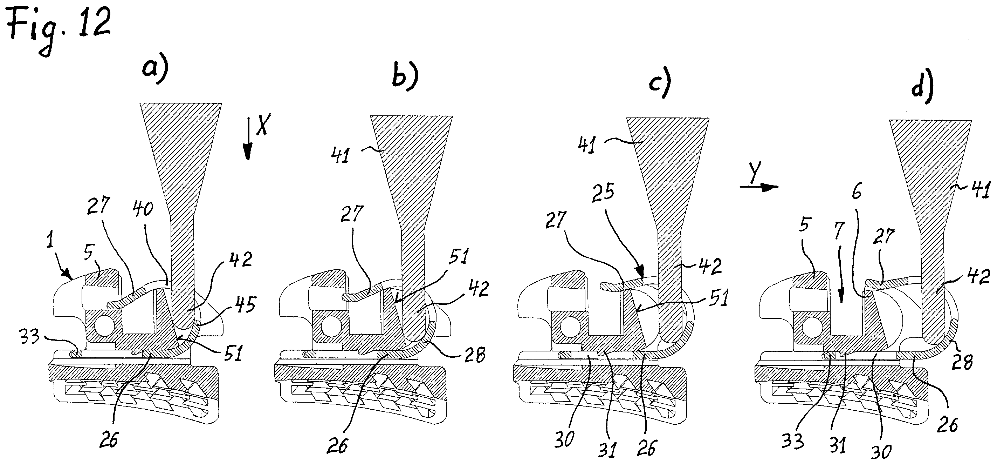

Um die Klammer 25 aus ihrer Schließstellung, vgl. Figur 1, in ihre Offenstellung, vgl. Figur 2, zu verschieben, wird der Klammeröffner 41 mit seinem Eingriffsende 42 in die Eingriffsöffnung 40 eingeführt, vgl. Figur 10 und Figur 12 a). Das Eingriffsende 42 wird beim Einführen in Richtung des Pfeiles X der Figur 12 von der Abstützfläche 51 und den beiden V-förmig zueinander verlaufenden Arme 43 und 44 mittig im Bereich der Klammerbiegung 28 positioniert. Das Eingriffsende 42 liegt dann im Bereich des Übergangsradius 45 an der Klammer 25 an, vgl. Figur 12 a), während sich die Klammer noch in ihrer Schließstellung befindet. Wird das Eingriffsende 42 weiter in (lingualer) Richtung X gedrückt, verteilt sich die vom Eingriffsende 42 ausgeübte Öffnungskraft zunächst im Wesentlichen zu gleichen Teilen auf die beiden Klammerschenkel 26 und 27. Dabei beginnt die Öffnungsbewegung der Klammer 25 und das Eingriffsende 42 gleitet an der Abstützfläche 51 entlang. Das Eingriffsende 42 nähert sich dabei dem ersten Klammerschenkel 26 an, vgl. Figur 12 b). Wird das Eingriffsende 42 anschließend weiter in Richtung des Pfeiles Y der Figur 12 gedrückt, wirkt ein größerer Teil der vom Eingriffsende 42 ausgeübten Öffnungskraft auf den ersten Klammerschenkel 26, vgl. Figur 12 c). Dies ist insbesondere vorteilhaft, wenn sich Plaque-Ablagerungen im Schlitz 18 befinden und der erste Klammerschenkel 26 schwergängig ist. Der Vorsprung 31 findet in der Aussparung 30 Platz und beeinträchtigt das Verschieben nicht. Die Verschiebebewegung in (okklusaler) Richtung Y endet, wenn der Anschlag 33 an dem Vorsprung 31 anschlägt, vgl. Figur 12 d). Die Klammer 25 befindet sich dann in ihrer Offenstellung, vgl. auch Figur 11. In dieser Offenstellung hat der zweite Klammerschenkel 27 eine Ruhelage auf der okklusalen Wand 6, in welcher er den Zugang zur Nut 7 aus labialer Richtung freigibt.

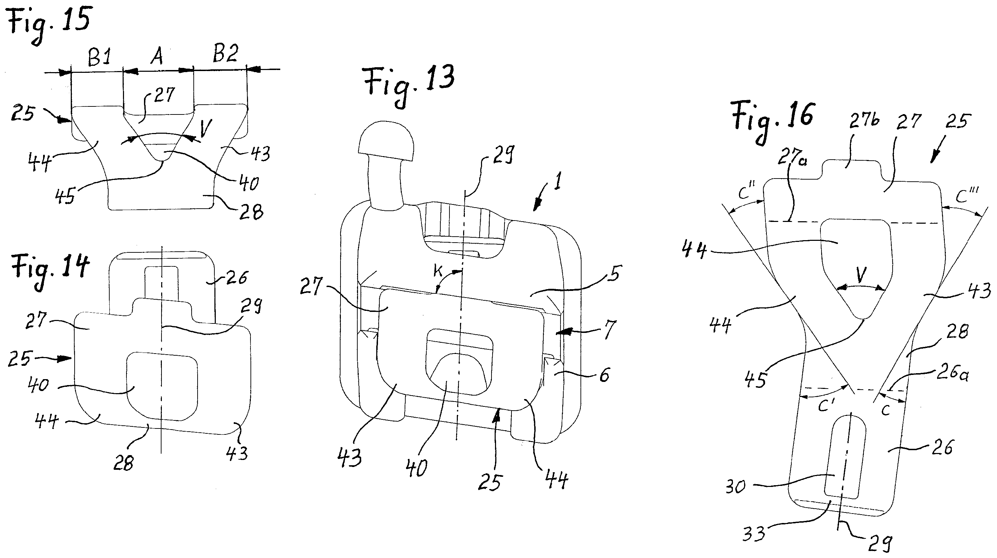

Das erste Ausführungsbeispiel des Brackets 1 gemäß der Figuren 1 bis 11 ist ein nicht anguliertes Bracket, bei welchem der Schlitz 18 senkrecht zur Nut 7 verläuft. Die Klammer 25 verläuft dementsprechend geradlinig, vgl. Figur 9. Bei dem in den Figuren 13 bis 16 dargestellten zweiten Ausführungsbeispiel handelt es sich um ein um 6° anguliertes Bracket 1. Der Winkel K zwischen der Nut 7 und dem Schlitz 18 bzw. der Längsrichtung 29 des ersten Klammerschenkels 26 beträgt somit 84°. Demzufolge ergeben sich unterschiedliche Winkel C, C', C" und C‴ der beiden V-förmigen Arme 43 und 44 zu der Längsrichtung der Klammer 25. Aufgrund der konstanten Breite B1 und B2 der Arme 43 und 44 ist V = C + C' bzw. V = C" + C‴. Im Übrigen entspricht die Ausgestaltung und Funktionsweise des zweiten Ausführungsbeispiels derjenigen des ersten Ausführungsbeispiels, sodass zur Vermeidung von Wiederholungen darauf verwiesen wird.

**Bezugszeichenliste**

| | | | |
|---|---|---|---|
| 1 | Bracket | 33 | Anschlag |
| 2 | Befestigungsseite | 35 | Rille |
| 3 | Vorsprünge | 40 | Eingriffsöffnung |
| 4 | Sockel | 41 | Klammeröffner |
| 5 | gingivale Wand | 42 | Eingriffsende |
| 6 | okklusale Wand | 43 | mesialer Arm |
| 7 | Nut | 44 | distaler Arm |
| 8 | gingivale Ligaturenflügel | 45 | Übergangsradius |
| 9 | okklusale Ligaturenflügel | 46 | Mitte |
| 11 | Grund der Nut 7 | 50 | Vertiefung |
| 12 | Rippen an Wand 6 | 51 | Abstützfläche |
| 14 | Schrägflächen am Grund 11 | | |
| 15 | Schrägflächen an Wand 5 | A | Abstand |
| 18 | Schlitz | B | Breite |
| 19 | lingual gelegene Oberfläche | B1 | Armbreite |
| 19a | Führungsfläche | B2 | Armbreite |
| 19b | Führungsfläche | C | Winkel |
| 20 | labial gelegene Oberfläche | D | Dicke |
| 21 | Seitenwände | E | Biegungswinkel |
| 24 | Ausschnitt | F | Biegungswinkel |
| 25 | Klammer | G | Winkel |
| 26 | erster Klammerschenkel | H1 | Höhe |
| 26a | Beginn des ersten Klammerschenkels | H2 | Höhe |
| | | J | Tiefe |
| 27 | zweiter Klammerschenkel | K | Winkel |
| 27a | Beginn des zweiten Klammerschenkels | V | Winkel |
| | | X | Richtung |
| 27b | Fortsatz | Y | Richtung |
| 28 | Klammerbiegung | | |
| 29 | Längsrichtung | | |
| 30 | Aussparung | | |
| 31 | Vorsprung | | |

## Patentansprüche

1. Selbstligierendes Bracket (1) für die Orthodontie, enthaltend
einen Sockel (4),
eine von dem Sockel (4) ausgehende okklusale Wand (6),
eine von dem Sockel (4) ausgehende gingivale Wand (5),
eine Nut (7), welche die okklusale Wand (6) und die gingivale Wand (5) voneinander trennt und sich durchgehend in Richtung von mesial nach distal erstreckt,
eine der Nut (7) abgewandte Befestigungsseite (2) zum Aufkleben des Brackets (1) auf eine linguale oder vestibuläre Oberfläche eines Zahnes,
einen Schlitz (18), welcher sich in Richtung von gingival nach okklusal erstreckt,
und eine federnde Klammer (25), welche einen ersten Klammerschenkel (26) und einen zweiten Klammerschenkel (27) aufweist, welche durch eine okklusal oder gingival angeordnete Klammerbiegung (28) miteinander verbunden sind,
wobei der erste Klammerschenkel (26) in dem Schlitz (18) steckt und darin in Richtung gingival-okklusal zwischen einer Schließstellung und einer Offenstellung der Klammer (25) verschiebbar ist,
wobei die Klammer (25) im Bereich der Klammerbiegung (28) eine Eingriffsöffnung (40) zum Ansetzen eines Klammeröffners (41) aufweist,
wobei die Eingriffsöffnung (40) - in einer Ansicht entlang der Längsrichtung (29) des ersten Klammerschenkels (26) oder in einer Draufsicht auf die in eine Ebene abgewickelte Klammer (25) - seitlich von zwei V-förmig zueinander verlaufenden Armen (43, 44) begrenzt wird,
wobei ein von mesial nach distal gemessener Abstand (A) zwischen dem mesialen Arm (43) und dem distalen Arm (44) mindestens so groß ist wie die von mesial nach distal gemessene Armbreite (B1; B2) jedes der beiden Arme (43, 44),
wobei der Querschnitt der Klammer (25) im Bereich der Klammerbiegung (28) außerhalb der Eingriffsöffnung (40) ein Minimum aufweist, welches nachfolgend als Minimalquerschnitt bezeichnet wird,
und wobei jeder der Arme (43, 44) im Bereich der Eingriffsöffnung (40) einen Armquerschnitt aufweist,
**dadurch gekennzeichnet, dass** die Summe der beiden Armquerschnitte an einer Stelle der Klammerbiegung (28) höchstens 10 % kleiner als der Minimalquerschnitt ist.

2. Bracket nach Anspruch 1, in welchem die Armbreite (B1; B2) jedes der beiden Arme (43, 44) halb so breit wie die kleinste Breite (B) der Klammerbiegung (28) im Bereich außerhalb der Eingriffsöffnung (40) ist.

3. Bracket nach Anspruch 1 oder 2 mit folgenden Merkmalen:
• der Querschnitt der Klammer (25) weist im Bereich der Klammerbiegung (28) ein als Maximalquerschnitt bezeichnetes Maximum auf,
• der Maximalquerschnitt ist höchstens 20 % größer als der Minimalquerschnitt.

4. Bracket nach einem der vorstehenden Ansprüche, in welchem sich Abschnitte der Klammerbiegung (28), deren Querschnitte mehr als 10 % größer als der Minimalquerschnitt sind, höchstens über 20 % des Gesamt-Biegungswinkels (F) der Klammerbiegung (28), insbesondere über einen Biegungswinkel von höchstens 30°, erstrecken.

5. Bracket nach einem der vorstehenden Ansprüche, in welchem der Abstand (A) zwischen den beiden Armen (43, 44) mindestens 0,7 mm beträgt.

6. Bracket nach einem der vorstehenden Ansprüche, in welchem der Winkel (V) zwischen den beiden Armen (43, 44) im Bereich von 40° bis 75°, insbesondere im Bereich von 45° bis 70°, liegt.

7. Bracket nach einem der vorstehenden Ansprüche, in welchem einer der Arme (43; 44) - in einer Draufsicht auf die in eine Ebene abgewickelte Klammer (25) - in einem Winkel (C; C'; C"; C‴) zu der Längsrichtung der Klammer (25) im Bereich von 20° bis 45°, insbesondere im Bereich von 23° bis 33°, verläuft.

8. Bracket nach einem der vorstehenden Ansprüche, in welchem sich die längliche Eingriffsöffnung (40) über mindestens 50 %, insbesondere mindestens 55 %, der gesamten Klammerbiegung (28) erstreckt.

9. Bracket nach einem der vorstehenden Ansprüche, in welchem sich die längliche Eingriffsöffnung (40) über einen Biegungswinkel (E) der Klammerbiegung (28) von mindestens 100°, insbesondere mindestens 120°, erstreckt.

10. Bracket nach einem der vorstehenden Ansprüche, in welchem sich an den Abschnitt der Klammerbiegung (28) mit den beiden V-förmig zueinander verlaufenden Armen (43; 44) ein Abschnitt der Klammerbiegung (28) anschließt, in welchem die beiden Arme (43; 44) parallel zueinander verlaufen.

11. Bracket nach einem der vorstehenden Ansprüche, in welchem die Klammerbiegung (28) - in einem Längsschnitt durch den ersten Klammerschenkel (26) gesehen - eine Mitte (46) aufweist, welche in einer ersten Höhe (H1) oberhalb des ersten Klammerschenkels (26) liegt,
und in welchem das dem ersten Klammerschenkel (26) zugewandte Ende der Eingriffsöffnung (40) auf einer zweiten Höhe (H2) oberhalb des ersten Klammerschenkels (26) liegt,
wobei die zweite Höhe (H2) in einem Bereich liegt, welcher von der um 20 % verringerten ersten Höhe (0,8 * H1) und der um 20 % vergrößerten ersten Höhe (1,2 * H1) begrenzt ist.

12. Bracket nach einem der vorstehenden Ansprüche, welches eine der Klammerbiegung (28) zugewandte Abstützfläche (51) für einen Klammeröffner (41) aufweist, welche schräg zum ersten Klammerschenkel (26), insbesondere in einem Winkel (G) von 60° bis 85°, verläuft.

13. Bracket nach einem der vorstehenden Ansprüche, in welchem die der Klammerbiegung (28) zugeordnete Wand (6) - in einer Ansicht entlang der Längsrichtung (29) des ersten Klammerschenkels (26) gesehen - an ihrem dem Grund der Nut (7) abgewandten Ende eine Vertiefung (50) aufweist, in welcher der zweite Klammerschenkel (27) und/oder die Klammerbiegung (28) der in ihrer Schließstellung befindlichen Klammer (25) sitzt.

14. Bracket nach Anspruch 13, in welchem die Tiefe (J) der Vertiefung (51) zumindest 80 % der Dicke (D) der Klammer (25) beträgt.

15. Baureihe von selbstligierenden Brackets (1) für die Orthodontie, welche mehrere Brackets (1) nach einem der vorstehenden Ansprüche umfasst, **dadurch gekennzeichnet, dass** sich der Minimalquerschnitt der Klammer (25) im Bereich der Klammerbiegung (28) eines der Brackets (1) der Baureihe um höchstens 10 % von dem jeweiligen Minimalquerschnitt jedes der anderen Brackets (1) der Baureihe unterscheidet.

## Claims

1. A self-ligating bracket (1) for orthodontics, comprising:
a base (4);
an occlusal wall (6) extending from the base (4);
a gingival wall (5) extending from the base (4);
a groove (7) separating the occlusal wall and the gingival wall (5) and extending continuously in a direction from mesial to distal;
a fastening side (2) facing away from the groove (7) for adhesively bonding the bracket (1) to a lingual or vestibular surface of a tooth;
a slit (18) extending in a direction from gingival to occlusal;
and a resilient clamp (25), which comprises a first clamp leg (26) and a second clamp leg (27), which are connected to each other by an occlusally or gingivally arranged clamp bend (28),
wherein the first clamp leg (26) is inserted in the slit (18) and can be moved therein in gingival-occlusal direction between a closed position and an open position of the clamp (25);
wherein the clamp (25) has an access opening (40) in the area of the clamp bend (28) for engagement of a bracket opener (41);
wherein the access opening (40), in a view along the longitudinal direction (29) of the first clamp leg (26) or in a top view of the clamp (25) unwound into a plane, is delimited laterally by two arms (43, 44) running in a V-shape towards each other;
wherein a distance (A) measured from mesial to distal between the mesial arm (43) and the distal arm (44) is at least as large as the arm width (B1; B2) of each of the two arms (43, 44) measured from mesial to distal;
wherein the cross-section of the clamp (25) in the area of the clamp bend (28) outside the access opening (40) has a minimum which is referred to as the minimum cross-section;
wherein each of the arms (43, 44) has an arm cross-section in the area of the access opening;
**characterized in that** the sum of the two arm cross-sections at one point of the clamp bend (28) is not more than 10% less than the minimum cross-section.

2. The bracket according to claim 1, wherein the arm width (B1; B2) of each of the two arms (43, 44) is half as wide as the smallest width (B) of the clamp bend (28) in the area outside the access opening (40).

3. The bracket according to claim 1 or 2 having the following features:
• the cross-section of the clamp (25) in the area of the clamp bend (28) has a maximum which is referred to as the maximum cross-section,
• the maximum cross-section is not more than 20% larger than the minimum cross-section.

4. The bracket according to any one of the preceding claims, wherein segments of the clamp bend (28) whose cross-sections are more than 10% larger than the minimum cross-section extend over maximally 20% of the total bending angle (F) of the clamp bend (28), in particular over a bending angle not exceeding 30°.

5. The bracket according to any one of the preceding claims, wherein the distance (A) between the two arms (43, 44) is at least 0.7 mm.

6. The bracket according to any one of the preceding claims, wherein the angle (V) between the two arms (43, 44) is in the range of 40° to 75°, in particular in the range of 45° to 70°.

7. The bracket according to any one of the preceding claims, wherein one of the arms (43; 44), in a top view of the clamp (25) unwound into a plane, extends at an angle (C; C'; C"; C‴) to the longitudinal direction of the clamp (25) in the range of 20° to 45°, in particular in the range of 23° to 33°.

8. The bracket according to any one of the preceding claims, wherein the oblong access opening (40) extends over at least 50%, in particular over at least 55 %, of the total clamp bend (28).

9. The bracket according to any one of the preceding claims, wherein the oblong access opening (40) extends over a bending angle (E) of the clamp bend (28) of at least 100°, in particular of at least 120°.

10. The bracket according to any one of the preceding claims, wherein a segment of the clamp bend (28) in which the two arms (43, 44) run parallel to each other adjoins the segment of the clamp bend (28) in which the two arms (43, 44) run in a V-shape towards each other.

11. The bracket according to any one of the preceding claims, wherein the clamp bend (28), as viewed in a longitudinal section through the first clamp leg (26), has a center (46) which lies at a first height (H1) above the first clamp leg (26), and wherein the end of the access opening (40) facing the first clamp (26) lies at a second height (H2) above the first clamp leg (26),
wherein the second height (H2) is in a range delimited by the first height (0.8 * H1) reduced by 20% and the first height (1.2 * H1) increased by 20%.

12. The bracket according to any one of the preceding claims, which comprises a support surface (51) for a bracket opener (41), which faces the clamp bend (28) and runs obliquely to the first clamp leg (26) at an angle (G) from 60° to 85°.

13. The bracket according to any one of the preceding claims, wherein the wall (6) assigned to the clamp bend (28), as viewed along the longitudinal direction of the first clamp leg (26), comprises a recess (50) at its end facing away from the base of the groove (7), in which recess sits the second clamp leg (27) and/or the clamp bend (28) of the clamp (25) located in its closed position.

14. The bracket according to claim 13, wherein the depth (J) of the recess (50) is at least 80% of the thickness (D) of the clamp.

15. A series of self-ligating brackets (1) for orthodontics, comprising a number of the brackets (1) according to any one of the preceding claims, wherein the minimum cross-section of the clamp (25) in the area of the clamp bend (28) of one of the brackets (1) of the series differs by no more than 10% from the respective minimum cross-section of each of the other brackets (1) of the series.

## Revendications

1. Attache auto-ligaturante (1) pour l'orthodontie, comprenant
une base (4),
une paroi occlusale (6) partant de la base (4),
une paroi gingivale (5) partant de la base (4),
une rainure (7) qui sépare la paroi occlusale (6) et la paroi gingivale (5) l'une de l'autre et s'étend de manière continue dans la direction mésiale à distale,
un côté de fixation (2) opposé à la rainure (7) pour coller l'attache (1) sur une surface linguale ou vestibulaire d'une dent,
une fente (18) qui s'étend dans la direction gingivale vers occlusale,
et une agrafe élastique (25) qui présente une première branche d'agrafe (26) et une seconde branche d'agrafe (27) qui sont reliées entre elles par une courbure d'agrafe (28) disposée de manière occlusale ou gingivale,
la première branche d'agrafe (26) étant insérée dans la fente (18) et pouvant y être déplacée dans la direction gingival-occlusale entre une position fermée et une position ouverte de l'agrafe (25),
l'agrafe (25) présentant, dans la zone de la courbure d'agrafe (28), une ouverture d'engagement (40) pour la mise en place d'un dispositif d'ouverture d'agrafe (41), l'ouverture d'engagement (40) étant délimitée, dans une vue le long de la direction longitudinale (29) de la première branche d'agrafe (26) ou dans une vue de dessus de l'agrafe (25) développé dans un plan, latéralement par deux bras (43, 44) s'étendant en forme de V l'un par rapport à l'autre,
la distance (A) mesurée de manière mésiale à distale entre le bras mésial (43) et le bras distal (44) étant au moins aussi grande que la largeur (B1 ; B2) mesurée de manière mésiale à distale de chacun des deux bras (43, 44),
le coupe transversal de l'agrafe (25) présentant, dans la zone de la courbure d'agrafe (28), à l'extérieur de l'ouverture d'engagement (40), un minimum qui est désigné ci-après par coupe transversal minimal,
et chacun des bras (43, 44) présentant, dans la zone de l'ouverture d'engagement (40), un coupe transversal de bras,
**caractérisée en ce que** la somme des deux coupes transversales de bras en un point de la courbure d'agrafe (28) est au maximum 10 % inférieure au coupe transversal minimal.

2. Attache selon la revendication 1, dans lequel la largeur de bras (B1 ; B2) de chacun des deux bras (43, 44) est égale à la moitié de la plus petite largeur (B) de la courbure d'agrafe (28) dans la zone située à l'extérieur de l'ouverture d'engagement (40).

3. Attache selon les revendications 1 ou 2, présentant les caractéristiques suivantes:
• le coupe transversal de l'agrafe (25) présente, dans la zone de la courbure d'agrafe (28), un maximum désigné par coupe transversal maximal,
• le coupe transversal maximal est au maximum 20 % plus grande que le coupe transversal minimal.

4. Attache selon l'une des revendications précédentes, dans laquelle les segments de la courbure d'agrafe (28) dont les coupes transversales sont supérieures de plus de 10 % au coupe transversal minimal s'étendent sur au maximum 20 % de l'angle de courbure total (F) de la courbure d'agrafe (28), en particulier sur un angle de courbure maximal de 30°.

5. Attache selon l'une des revendications précédentes, dans laquelle la distance (A) entre les deux bras (43, 44) est d'au moins 0,7 mm.

6. Attache selon l'une des revendications précédentes, dans laquelle l'angle (V) entre les deux bras (43, 44) est dans la plage de 40° à 75°, en particulier de 45° à 70°.

7. Attache selon l'une des revendications précédentes, dans laquelle l'un des bras (43 ; 44) - dans une vue de dessus de l'agrafe (25) développée dans un plan - forme un angle (C; C'; C"; C") par rapport à la direction longitudinale de l'agrafe (25) dans la plage de 20° à 45°, en particulier dans la plage de 23° à 33°.

8. Attache selon l'une des revendications précédentes, dans laquelle l'ouverture d'engagement allongée (40) s'étend sur au moins 50 %, en particulier au moins 55 %, de la courbure totale d'agrafe (28).

9. Attache selon l'une des revendications précédentes, dans laquelle l'ouverture d'engagement allongée (40) s'étend sur un angle de courbure (E) de la courbure d'agrafe (28) d'au moins 100°, en particulier d'au moins 120°.

10. Attache selon l'une des revendications précédentes, dans laquelle la segment de la courbure d'agrafe (28) avec les deux bras (43 ; 44) s'étendant en forme de V l'un par rapport à l'autre est suivie d'une segment de la courbure d'agrafe (28) dans laquelle les deux bras (43 ; 44) s'étendent parallèlement l'un à l'autre.

11. Attache selon l'une des revendications précédentes, dans laquelle la courbure (28) - vue dans un coupe longitudinal à travers la première branche d'agrafe (26) - présente un centre (46) qui se trouve à une première hauteur (H1) au-dessus de la première branche d'agrafe (26)
et dans lequel l'extrémité de l'ouverture d'engagement (40) tournée vers la première branche d'agrafe (26) se trouve à une seconde hauteur (H2) au-dessus de la première branche d'agrafe (26),
la seconde hauteur (H2) se trouvant dans une plage qui est délimitée par la première hauteur réduite de 20 % (0,8 * H1) et la première hauteur augmentée de 20 % (1,2 * H1).

12. Attache selon l'une des revendications précédentes, qui présente une surface d'appui (51) tournée vers la courbure d'agrafe (28) pour un dispositif d'ouverture d'agrafe (41), laquelle s'étend en biais par rapport à la première branche d'agrafe (26), en particulier selon un angle (G) de 60° à 85°.

13. Attache selon l'une des revendications précédentes, dans laquelle la paroi (6) associée à la courbure d'agrafe (28) - vue dans une vue le long de la direction longitudinale (29) de la première branche d'agrafe (26) - présente, à son extrémité opposée au fond de la rainure (7), un renfoncement (50) dans lequel se loge la seconde branche d'agrafe (27) et/ou la courbure d'agrafe (28) de l'agrafe (25) en position fermée.

14. Attache selon la revendication 13, dans laquelle la profondeur (J) du renfoncement (50) est d'au moins 80 % de l'épaisseur (D) de l'agrafe (25).

15. Série d'attaches auto-ligaturantes (1) pour l'orthodontie, qui comprend plusieurs attaches (1) selon l'une des revendications précédentes, **caractérisée en ce que** le coupe transversal minimal de l'agrafe (25) dans la zone de courbure d'agrafe (28) de l'une des attaches (1) de la série diffère de 10 % au maximum du coupe transversal minimal respective de chacune des autres attaches (1) de la série.
